# EUROPÄISCHE PATENTSCHRIFT

(11) **EP 0 798 273 B1**
(45) Veröffentlichungstag und Bekanntmachung des Hinweises auf die Patenterteilung: **24.01.2001**
(21) Anmeldenummer: 97104572.9
(22) Anmeldetag: 18.03.1997
(51) Int. Cl.: C04B 26/02, E04F 21/08

(54) **Putz sowie Verfahren, Vorrichtung und Zwischenprodukt zu seiner Aufbringung**
Plaster and process, apparatus and intermediate product for depositing it
Enduit ainsi que procédé, dispositif et produit intermédiaire pour son application

(30) Priorität: 28.03.1996 DE 19612296
(43) Veröffentlichungstag der Anmeldung: 01.10.1997
(73) Patentinhaber: MARMORIT GmbH, 79283 Bollschweil (DE)
(72) Erfinder: Opferkuch, Roland, 79187 Tunsel/Bad Krozingen (DE); Hartenburg, Roger, 68623 Lampertheim (DE)
(74) Vertreter: Helbing, Jörg, Dr. Dipl.-Chem.

(56) Entgegenhaltungen:
- EP-A- 0 051 821
- EP-A- 0 591 645
- DE-A- 3 533 625

## Beschreibung

Gegenstand der vorliegenden Erfindung ist ein Putz bestehend aus punktuell miteinander verklebten Füllstoffkörnern, wobei die vorzugsweise runden Körner eine möglichst enge Korngrößenverteilung aufweisen, definiert durch den Parameter n ≥ 9 ermittelt nach DIN 66 145 unter Vernachlässigung von je 1 % Über- und Unterkorn und wobei die Durchschnittsgröße des Monokorns im Bereich von 2 bis 6 mm liegt. Weiterhin betrifft die Erfindung ein Verfahren zum Auftragen dieses Putzes, eine Vorrichtung und ein Zwischenprodukt zur Durchführung des Verfahrens.

Ein gattungsgemäßer Putz ist bekannt aus der EP 0 0591 645 der Anmelderin. Dieser Putz ist ein Unterputz und besteht aus einem ausgehärteten ein- oder mehrkomponentigen Reaktionsharz und einem Füllstoff bestehend aus einem vorzugsweise runden Monokorn möglichst enger Korngrößenverteilung definiert durch den Parameter n ≥ 9, ermittelt nach DIN 66 145 unter Vernachlässigung von je 1 % Über- und Unterkorn und wobei die Durchschnittsgröße des Monokorns im Bereich von 2 bis 6 mm liegt. Dieser Unterputz hat sich gut bewährt. Er wird aufgebracht, indem der Füllstoff an der Baustelle mit einem ein- oder mehrkomponentigen Reaktionsharz benetzt, auf die zu verputzende Wandfläche aufgebracht und ausgehärtet wird.

Aus der DE-B-25 32 673 ist ein feinkörniger Zuschlagstoff für Kunstharzbeton bekannt, bei welchem Quarzsand und ein Reaktionsharzbinder, der bereits Quarzmehl enthält so zubereitet wird, daß verschiedene Einkorngrößen vorhanden sind, wobei eine grobe Einkornkörnung vorhanden ist, die eine dichteste Kugelpackung mit Packungsnischen aufweist, und eine weitere Einkorngröße, die die Packungsnischen annähernd ausfüllt, wobei das Quarzmehl eine Körnung von unter 0,09 mm aufweisen soll. Aus diesem Material werden Kunstharzbetonfertigteile mit Sichtfläche, ein spachtelbarer Industrie-Estrich oder selbstverlaufende Beschichtungen für Lebensmittelbetriebe hergestellt. Dieses Material ist aber nicht geeignet als Unterputzmaterial.

Aus der DE-A-20 04 223 ist ein Kunstharzmörtel bekannt, bestehend aus Gießharz und verschiedenen Zuschlägen, wobei Steinkohlen-Elektrofilterasche zugesetzt werden soll. Hierdurch wird die mechanische Festigkeit und der Füllgrad erhöht. Dieses Material ist jedoch nicht als Unterputzmaterial geeignet.

Aus der DE-C-35 33 625 ist ein Leichtwerkstoff und Verfahren zu dessen Herstellung bekannt, der auf der Basis von kunststoffgebundenen Mikrohohlglaskugeln aufgebaut ist. Dabei soll der Füllstoff von Kunststoff eingehüllt sein, jedoch die Zwischenräume zwischen den Füllstoffteilchen nicht vollständig mit Kunststoff ausgefüllt werden. Zur Herstellung werden die Mikrohohlglaskugeln und eventuell weitere Füllstoffe mit Kunststoffpulver beschichtet, wobei dann durch Wärmeinwirkung das Kunststoffpulver eben zum Fließen bzw. Sintern gebracht wird. Das so entstandene noch nicht ausgehärtete Granulat wird dann durch weitere Wärmeeinwirkung gegebenenfalls unter Formbedingungen endgültig verformt und anschließend abgekühlt. Auch dieses Material ist nicht geeignet für die Herstellung eines Unterputzes.

Die nicht vorpublizierte DE-A-44 43 594 schlägt einen Putz oder Estrich vor, bei dem jedoch das Bindemittel hydraulisch abbindender Portlandzement ist, dem weitere Komponenten zugemischt sein können. Es handelt sich somit um einen Putz, aus dem anschließend das überschüssige Wasser wieder verdunsten muß.

Ein Nachteil des Unterputzes gemäß EP 0 0591 645 ist, daß auf der Baustelle die Komponenten des Reaktionsharzes bereitgestellt werden müssen und erst dort angemischt werden. Dabei kann es durchaus zu Verwechslungen und Falschdosierungen der Komponenten kommen. Weiterhin müssen die Mischersysteme nach der Benutzung in relativ aufwendiger Weise gereinigt werden. Schließlich ist zu beachten, daß die Komponenten von Reaktionsharzen durchaus ätzende oder sensibilisierende Eigenschaften aufweisen können, so daß die Handhabung nur mit ausreichenden Vorsichtsmaßnahmen durchzuführen ist.

Die Erfindung hat sich die Aufgabe gestellt, diese Nachteile des bekannten und oben beschriebenen Unterputzes zu beseitigen und dadurch die Handhabung auf der Baustelle sicherer, zuverlässiger und einfacher zu gestalten.

Diese Aufgabe wurde jetzt überraschend einfach dadurch gelöst, daß die Verklebung aus einem Heißschmelzkleber oder einem erst bei Erhitzung reagierenden Reaktivkleber besteht. Diese lassen sich nämlich bereits vorher auf den Füllstoff aufbringen, so daß auf der Baustelle nur noch ein einsatzfertiges Material angeliefert werden muß. Es kann zu keinen Verwechslungen der Komponenten kommen. Das Anmischen auf der Baustelle entfällt. Die Reinigung der Mischersysteme entfällt. Die Berührung mit ätzenden oder sensibilisierenden Bindemitteln entfällt und es sind keine Fehldosierungen mehr zu befürchten. Im System befinden sich nur noch definierte und nicht mehr beeinflußbare Bindemittelmengen.

Als Heißschmelzkleber kommen vor allen Dingen die handelsüblichen Polyester, Polyamide oder Polyolefine in Frage.

Als bei der Erhitzung reagierende Reaktivkleber kommen in Frage Vinylesterharze oder Polyesterharze mit einem erst bei höheren Temperaturen wirksamen Peroxid als Starter. Weiterhin kommen in Frage Urethan-Harze mit gekappten Polyolen und Epoxyharze mit Säureanhydriden, Dicyanamiden, Polyamiden und/oder carboxylgruppenhaltigen Polyestern.

Sowohl die Heißschmelzkleber als auch die Reaktivkleber werden vorzugsweise als Pulver eingesetzt, welche mittels eines Dispersionsklebers auf die Körner der Füllstoffe aufgeklebt sind. Dabei ist es durchaus möglich, daß der Dispersionskleber eine der reaktiven Komponenten oder den Starter enthält.

Eine weitere Methode, die Schmelzkleber oder Reaktivharze auf die Körner des Füllstoffes aufzubringen, ist die Ummantelung mit Plastisolen.

Da auf der Baustelle überwiegend alkalische Materialien zum Einsatz kommen, sollten die Kleber alkalibeständig sein.

Der erfindungsgemäße Putz kann als solcher oder als Unterputz unmittelbar nach dem Auftragen bereits weiterbearbeitet und gegebenenfalls mit dem Deckputz abgedeckt werden. Es genügt die Zeit zur Abkühlung bzw. Verfestigung des Reaktionsklebers nach dem Erhitzen, um einem erfindungsgemäßen Unterputz die ausreichende Festigkeit und Haftfestigkeit auf dem Untergrund zu verleihen.

Sofern die Reaktionskleber reaktive Gruppen oder Schutzgruppen abspalten, werden Systeme bevorzugt, bei denen Wasser abgespalten wird, da die Abspaltung beispielsweise von Ammoniak, Aminen, Säuren oder Aldehyden zu unerwünschten Geruchsbelästigungen und gegebenenfalls Beeinträchtigungen des Oberputzes führen können. Sollte dennoch für Spezialzwecke derartige Reaktivkleber zum Einsatz kommen, beispielsweise um eine ausreichende Haftfestigkeit an einem speziellen Untergrund zu gewährleisten, so läßt sich ein erfindungsgemäßer Unterputz auch durch eine Grundierung gegen die Einflüsse auf den Oberputz isolieren.

Der erfindungsgemäße Putz wird im allgemeinen so aufgetragen, daß der zuvor mit dem Heißschmelzkleber oder dem Reaktivkleber ummantelte Füllstoff von einem Vorratsbehälter mittels Warmluft zu einer Spritzdüse befördert wird, wo er unter weiterer Wärmezufuhr auf den Untergrund aufgespritzt wird. Der Transport mittels Warmluft sorgt für eine Vorwärmung und erleichtert eine ausreichende und gleichmäßige Erhitzung beim Austritt aus der Spritzdüse. Der Transport mittels vorgeheizter Luft zur Spritzdüse ist einfach. Der Transport der erfindungsgemäß verwendeten Füllstoffe ohne Ummantelung mit Klebern mittels Luftstrom hat sich bereits bei dem Verfahren gemäß EP 0 059 645 bewährt. Die Erhitzung des Materials in oder an der Spritzdüse kann erfolgen beispielsweise durch weitere Heißluft oder Hochfrequenz.

Der erfindungsgemäße Putz kann nach dem Abkühlen gewünschtenfalls geglättet werden zum Beispiel mit einem Gitterrabot oder bei thermoplastischen Systemen auch mit einer "heißen Latte".

Eine Vorrichtung zur Durchführung des Verfahrens besteht im einfachsten Fall aus
a) einem Container für beschichteten Füllstoff,
b) mindestens einem Vordruckbehälter für den Füllstoff,
c) einer Druckluftversorgung,
d) einer Heizvorrichtung für Druckluft,
e) einer steuerbaren Dosiervorrichtung für das Gemisch aus Füllstoff und geheizter Druckluft und
f) einer Spritzvorrichtung mit Heizung.

Um eine kontinuierliche Arbeitsweise zu erleichtern, kann außer dem Vordruckbehälter ein zweiter Vordruckbehälter vorgesehen sein, wobei der zweite Vordruckbehälter zum Auftragen des Unterputzes zur Verfügung steht, während der erste von Zeit zu Zeit aus dem Container nachgefüllt wird.

Die Heizung der Luft kann direkt oder indirekt erfolgen, wobei elektrische Heizvorrichtungen besonders leicht steuerbar sind und dadurch unerwünschte Überhitzungen vermieden werden können. Auch die Dosiervorrichtung wird vorzugsweise elektronisch gesteuert, so daß die Austrittsmenge an erhitztem Material zumindest an- und abgeschaltet werden kann. Prinzipiell ist es aber auch möglich, die Austrittsmenge innerhalb gewisser Grenzen nahezu stufenlos zu regeln.

Die Vordruckbehälter können beispielsweise Sensoren für minimale und maximale Befüllung aufweisen und dadurch der Steuereinheit der Gesamtvorrichtung mitteilen, wann von einem Vordruckbehälter auf den anderen umgeschaltet werden muß, um den entleerten Behälter erneut aus dem Container aufzufüllen.

Auch die Spritzvorrichtung mit Heizung kann elektronisch gesteuert werden, um zu erreichen, daß das Material stets innerhalb eines vorgegebenen Temperaturfensters auf den Untergrund aufgespritzt wird.

Sofern nach dem erfindungsgemäßen Verfahren mit dem erfindungsgemäß verwendeten Material eine etwas dickere Schicht auf eine glatte Oberfläche gespritzt wird, die so ausgerüstet ist, daß der Heißschmelzkleber oder der Reaktivkleber darauf nicht haftet, können auch dünne, stabile aber poröse Platten hergestellt werden, die auf der Baustelle an Stellen aufgebracht werden, die Aussparungen und kleinere Öffnungen aufweisen, die dennoch abgedeckt und mit dem Oberputz versehen werden sollen. Diese Aussparungen können somit in einfacher Weise unsichtbar gemacht werden und mit dem gleichen Oberputz in einem Arbeitsgang abgedeckt werden.

## Patentansprüche

1. Putz bestehend aus punktuell miteinander verklebten Füllstoffkörnern, wobei die Körner eine möglichst enge Korngrößenverteilung aufweisen, definiert durch den Parameter n ≥ 9 ermittelt nach DIN 66 145 unter Vernachlässigung von je 1 % Über- und Unterkorn und wobei die Durchschnittsgröße des Monokorns im Bereich von 2 bis 6 mm liegt, dadurch gekennzeichnet, daß die Verklebung aus einem Heißschmelzkleber oder einem erst bei Erhitzung reagierenden Reaktivkleber besteht.

2. Putz gemäß Anspruch 1, dadurch gekennzeichnet, daß der Heißschmelzkleber ein Polyester, Polyamid oder Polyolefin ist.

3. Putz gemäß Anspruch 1, dadurch gekennzeichnet, daß der bei Erhitzung reagierende Reaktivkleber ein Vinylesterharz oder Polyesterharz mit einem erst bei höheren Temperaturen wirksamen Peroxid als Starter.

4. Putz gemäß Anspruch 1, dadurch gekennzeichnet, daß der bei Erhitzung reagierende Reaktivkleber ein Urethan-Harz ist mit gekappten Polyolen.

5. Putz gemäß Anspruch 1, dadurch gekennzeichnet, daß der bei Erhitzung reagierende Reaktivkleber ein Epoxyharz ist mit Säureanhydriden, Dicyanamiden, Polyamiden und/oder carboxylgruppenhaltigen Polyestern.

6. Putz gemäß einem der Ansprüche 1 bis 5, dadurch gekennzeichnet, daß der Kleber als Pulver vorliegt, welches mittels eines Dispersionsklebers auf die Körner der Füllstoffe aufgeklebt ist, wobei der Dispersionskleber gegebenenfalls eine der reaktiven Komponenten oder den Starter enthält.

7. Putz gemäß einem der Ansprüche 1 bis 5, dadurch gekennzeichnet, daß der Kleber als Plastisol vorliegt, welches die Körner als dünne Schicht umgibt.

8. Putz gemäß einem der Ansprüche 1 bis 7, dadurch gekennzeichnet, daß der Kleber alkalibeständig ist.

9. Verfahren zur Aufbringung eines Putzes gemäß einem der Ansprüche 1 bis 8, dadurch gekennzeichnet, daß der zuvor mit dem Heißschmelzkleber oder Reaktivkleber ummantelte Füllstoff von einem Vorratsbehälter mit Warmluft zu einer Spritzdüse befördert wird, wo er unter weiterer Wärmezufuhr auf den Untergrund aufgespritzt wird.

10. Vorrichtung zur Durchführung des Verfahrens gemäß Anspruch 9 bestehend aus
a) einem Container für beschichteten Füllstoff,
b) mindestens einem Vordruckbehälter für den Füllstoff,
c) einer Druckluftversorgung,
d) einer Heizvorrichtung für Druckluft,
e) einer steuerbaren Dosiervorrichtung für das Gemisch aus Füllstoff und geheizter Druckluft und
f) einer Spritzvorrichtung mit Heizung.

11. Körner zur Herstellung eines Putzes gemäß einem der Ansprüche 1 bis 8, wobei die Körner eine möglichst enge Korngrößenverteilung aufweisen, definiert durch den Parameter n ≥ 9 ermittelt nach DIN 66 145 unter Vernachlässigung von je 1 % Über- und Unterkorn und wobei die Durchschnittsgröße des Monokorns im Bereich von 2 bis 6 mm liegt und wobei die Körner vorbeschichtet sind mit einem Heißschmelzkleber oder einem erst bei Erhitzung reagierenden Reaktivkleber besteht.

## Claims

1. A plaster consisting of spot-bonded filler grains, said grains having as narrow as possible a grain size distribution, defined by the parameter n ≥ 9 as determined according to DIN 66 145, neglecting 1% each of oversize and undersize, the average size of a monograin being within the range of from 2 to 6 mm, characterized in that said bonding consists of a hot-melt adhesive or a reactive adhesive which reacts only when heated.

2. The plaster according to claim 1, characterized in that said hot-melt adhesive is a polyester, polyamide or polyolefin.

3. The plaster according to claim 1, characterized in that said reactive adhesive reacting when heated is a vinyl ester resin or polyester resin with an initiator peroxide which is active only at elevated temperatures.

4. The plaster according to claim 1, characterized in that said reactive adhesive reacting when heated is a urethane resin with capped polyols.

5. The plaster according to claim 1, characterized in that said reactive adhesive reacting when heated is an epoxy resin with acid anhydrides, dicyanamides, polyamides and/or carboxy-group containing polyesters.

6. The plaster according to any of claims 1 to 5, characterized in that said adhesive is in the form of a powder which is adhered to the grains of the fillers using a dispersion adhesive, said dispersion adhesive optionally containing one of the reactive components or the initiator.

7. The plaster according to any of claims 1 to 5, characterized in that said adhesive is in the form of a plastisol which coats the grains as a thin film.

8. The plaster according to any of claims 1 to 7, characterized in that said adhesive is resistant to alkali.

9. A method for applying a plaster according to any of claims 1 to 8, characterized in that said filler previously coated with said hot-melt adhesive or reactive adhesive is fed from a storage container to a spraying nozzle using hot air, from which spraying nozzle it is sprayed onto the substrate with further application of heat.

10. A device for performing the method according to claim 9, consisting of:
a) a container for coated filler;
b) at least one precompression container for the filler;
c) a pressurized air supply;
d) a heating means for pressurized air;
e) a controllable metering device for the mixture of filler and heated pressurized air; and
f) a spraying device with heating.

11. Grains for preparing a plaster according to any of claims 1 to 8, said grains having as narrow as possible a grain size distribution, defined by the parameter n ≥ 9 as determined according to DIN 66 145, neglecting 1% each of oversize and undersize, the average size of a monograin being within the range of from 2 to 6 mm, wherein said grains are precoated with a hot-melt adhesive or a reactive adhesive which reacts only when heated.

## Revendications

1. Enduit constitué de grains de matière de charge, ponctuellement collés les uns aux autres, les grains présentant une distribution granulométrique aussi étroite que possible, définie par le paramètre n ≥ 9 tel que déterminé selon DIN 66 145, en négligeant 1 % du refus et du tamisât, la taille moyenne des grains individuels étant comprise entre 2 et 6 mm, caractérisé en ce que la colle est constituée d'un adhésif thermo-fusible, ou d'un adhésif réactif ne réagissant qu'à la chaleur.

2. Enduit selon la revendication 1, caractérisé en ce que l'adhésif thermo-fusible est un polyester, un polyamide ou une polyoléfine.

3. Enduit selon la revendication 1, caractérisé en ce que l'adhésif réactif réagissant à la chaleur est une résine d'ester vinylique ou une résine de polyester, contenant en tant qu'amorceur un peroxyde qui n'agit qu'à hautes températures.

4. Enduit selon la revendication 1, caractérisé en ce que l'adhésif réactif réagissant au chauffage est une résine d'uréthanne comportant des polyols coiffés.

5. Enduit selon la revendication 1, caractérisé en ce que l'adhésif réactif réagissant à la chaleur est une résine époxyde, avec des anhydrides d'acide, des dicyanamides, des polyamides et/ou des polyesters carboxylés.

6. Enduit selon l'une des revendications 1 à 5, caractérisé en ce que l'adhésif se présente sous forme d'une poudre, qui à l'aide d'un adhésif en dispersion est collée sur les grains des matières de charge, l'adhésif en dispersion contenant éventuellement l'un des composants réactifs, ou l'amorceur.

7. Enduit selon l'une des revendications 1 à 5, caractérisé en ce que l'adhésif se présente sous forme d'un plastisol qui entoure les grains sous forme d'une couche mince.

8. Enduit selon l'une des revendications 1 à 7, caractérisé en ce que l'adhésif est résistant aux alcalis.

9. Procédé d'application d'un enduit selon l'une des revendications 1 à 8, caractérisé en ce que la matière de charge, entourée au préalable de l'adhésif thermo-fusible ou de l'adhésif réactif, est transportée à l'aide d'air chaud d'un réservoir à une buse de pulvérisation, où, sous l'effet d'un apport supplémentaire de chaleur, elle est appliquée par pulvérisation sur le subjectile.

10. Appareil pour mettre en oeuvre le procédé selon la revendication 9, constitué
a) d'un récipient pour la matière de charge enduite,
b) d'au moins un réservoir pour la matière de charge,
c) d'une source d'air comprimé,
d) d'un dispositif de chauffage de l'air comprimé,
e) d'un dispositif doseur pouvant être commandé, destiné au mélange de la matière de charge et de l'air comprimé chauffé, et
f) d'un dispositif de pulvérisation avec chauffage.

11. Grains destinés à fabriquer un enduit selon l'une des revendications 1 à 8, les grains présentant une distribution granulométrique aussi étroite que possible, définie par le paramètre n ≥ 9 tel que déterminé selon DIN 66 145, en négligeant 1 % du refus et tamisat, la taille moyenne des grains individuels étant comprise entre 2 et 6 mm, les grains étant enduits au préalable d'un adhésif thermo-fusible ou d'un adhésif réactif ne réagissant qu'à la chaleur.
